# EUROPÄISCHE PATENTSCHRIFT

(11) **EP 1 257 405 B1**
(45) Veröffentlichungstag und Bekanntmachung des Hinweises auf die Patenterteilung: **01.09.2004**
(21) Anmeldenummer: 01911435.4
(22) Anmeldetag: 01.02.2001
(51) Int. Cl.: B29C 47/38, B29C 47/42

(54) **EXTRUDER MIT BLISTER-MECHANISMUS**
EXTRUDER COMPRISING BLISTER MECHANISM
EXTRUDEUSE AVEC MACHINE A BLISTER

(30) Priorität: 24.02.2000 DE 10009843; 05.12.2000 DE 10061345
(43) Veröffentlichungstag der Anmeldung: 20.11.2002
(73) Patentinhaber: Berstorff GmbH, 30625 Hannover (DE)
(72) Erfinder: BEHLING, Michael, 31787 Hameln (DE)
(74) Vertreter: Meissner, Peter E., Dipl.-Ing.
(86) Internationale Anmeldenummer: PCT/DE2001/000486
(87) Internationale Veröffentlichungsnummer: WO 2001/062469

(56) Entgegenhaltungen:
- EP-A- 0 588 008
- EP-A- 1 048 433
- DE-A- 19 831 540
- US-A- 3 122 789
- US-A- 4 332 481

## Beschreibung

Die Erfindung betrifft einen Extruder, insbesondere zur Verarbeitung von Kunststoffschmelzen, mit einem in einem Extrudergehäuse angeordneten Extrusionsraum, durch den sich , mindestens eine Extruderschneckenwelle motorisch drehbar erstreckt, die mindestens einen zylindermantelförmigen Abschnitt auf der Schneckenwelle aufweist, wobei der Extrusionsraum mindestens einen Gehäuseabschnitt aufweist, der zur Bildung eines Ringspalts als Drosselstelle (Blister). insbesondere zur Einstellung des Drucks der Schmelze, die mindestens eine Extruderschneckenwelle im Bereich des mindestens einen zylindermantelförmigen Bereichs im wesentlichen äquidistant umgibt.

Eine solche als umlaufender Spalt, beispielsweise als Ringspalt ausgebildete Drosselstelle im Extrusionsraum wird auch als Blister bezeichnet und dienst insbesondere zur Einstellung des Drucks der im Extruder verarbeiteten Schmelze. Hinter dieser Drosselstelle können beispielsweise Schleppmittel zugesetzt werden, die in die aufschäumende Kunststoffschmelze eingearbeitet werden und als Stripmittel dienen. Die Wirkung des Blisters ist stark abhängig von der Spalthöhe im Ringspalt zwischen dem zylindrischen Teil der Extruderschnecke und der Innenoberfläche des zylindrischen Extrusionsraums. Die Spalthöhe liegt im praktischen Fall häufig in einer Größenordnung von etwa 3 mm. Die optimale Spalthöhe ist weniger von der Baugröße des jeweiligen Extruders als vielmehr von den Eigenschaften des zu verarbeitenden Materials (Temperatur, Zähigkeit) abhängig. Nach dem bisherigen Stand der Technik ist eine Veränderung der Spalthöhe regelmäßig mit einem entsprechenden Austausch der Schneckenwelle bzw. des zylindrischen Teils der Schneckenwelle im Bereich der Drosselstelle verbunden. Die Verarbeitung unterschiedlicher Werkstoffe erfordert daher häufig einen Wechsel der Schneckenwelle, damit möglichst optimale Verarbeitungsbedingungen eingestellt werden können. Im Falle nichtstationärer Verarbeitungsprozesse ändert sich die optimale Größe des Ringspaltes des Blisters. Bisher besteht keine Möglichkeit, in einer solchen Situation eine Optimierung der Spalthöhe vorzunehmen. Insbesondere bei Anfahrvorgängen, bei denen noch keine konstante Betriebstemperatur des Extruders erreicht ist, können sich durch unterschiedliche Temperaturdehnungen Veränderungen in der wirksamen Spalthöhe des Blisters einstellen. Auch dies lässt sich bisher nicht in optimaler Weise beherrschen.

Aus der DE 198 31 540 A1 ist eine Vorrichtung bekannt zur partiellen Veränderung eines geschlossenen Fließkanalquerschnitts, dessen Innenkontur durch einen beispielsweise zylindrischen Verdrängungskörper gebildet wird. Der Fließkanal ist vorzugsweise Teil einer Extrusionsdüse zur Erzeugung eines Schlauchs aus fließfähigen Massen. Die Vorrichtung besitzt äußere Stellelemente in Form radial von außen nach innen zustellbarer Stifte und mindestens einen Bereich einer Fließkanalwand, der aus einer Hülse mit einer Wanddicke von maximal 1 mm besteht, wobei diese Hülse mittels der zustellbaren Stifte lokal nach innen deformierbar ist. Der im Fließkanal angeordnete Verdrängungskörper kann ebenfalls mit einer Hülse mit kleiner Wanddicke versehen sein, die über auf konischen Stützflächen axial verschiebliche Stützelemente nach außen lokal verformbar ist. Auf diese Weise kann der Fließkanalquerschnitt im Bereich der dünnen Fließkanalwand gezielt verringert werden. Nachteilig bei dieser bekannten Vorrichtung ist es, dass die zustellbaren Stifte und verschieblichen Stützelemente keine über dem Querschnitt des Fließkanals gleichmäßige Verformung zulassen, da die Einleitung der Verformungskräfte immer nur punktuell oder örtlich begrenzt erfolgen kann. Je größer die Zahl der zur Verformung eingesetzten Elemente ist, umso gleichmäßiger ist zwar die Verformung einstellbar, umso größer ist aber auch der Betätigungsaufwand für diese Elemente. Als weiterer Nachteil kommt hinzu, dass die dünnen Wände der Hülsen unvermeidbar durch den im Fließkanal herrschenden Massendruck entgegen der Kraftwirkung der zur Verstellung eingesetzten Elemente verformt werden. Ein Betriebseinsatz unter den geometrischen Verhältnissen des völlig unbelasteten Zustands (Nullstellung) der Vorrichtung ist somit unmöglich.

Aufgabe der vorliegenden Erfindung ist es, einen Extruder der eingangs genannten Art dahingehend weiterzubilden, dass eine weitgehend optimale Betriebsweise im Bereich des Blisters möglich ist, auch wenn unterschiedliche Werkstoffe verarbeitet werden sollen oder sich die Werkstoffeigenschaften verändern, ohne dass ein größerer Umrüstaufwand für den Extruder erforderlich wird. Der Aufwand für die Verstellung des Blisters soll möglichst gering sein.

Gelöst wird diese Aufgabe bei einem gattungsgemäßen Extruder dadurch, dass die Spalthöhe des umlaufender Spalts am Blister durch von außen einstellbare Kraftwirkung unter elastischer Verformung der Oberfläche des Extrusionsraums und/oder der Schneckenwelle gezielt veränderbar ist. Hierzu sieht die Erfindung ein hydraulisches Druckaggregat vor, welches die Kraft zur Oberflächenverformung im Bereich der Drosselstelle entweder an der inneren Oberfläche des Extrusionsraums oder an der zylindrischen Oberfläche der mindestens einen Schneckenwelle oder auch an beiden liefert, wobei im Bereich der Drosselstelle in der Wand des Gehäuseabschnitts, wo der Blister angeordnet werden soll, und/oder im zylindrischen Teil der mindestens einen Schneckenwelle eine hydraulische Druckkammer vorgesehen wird. Die Druckkammer weist auf der dem Extrusionsraum jeweils zugewandten Seite eine im Vergleich zur Wanddicke des Extrusionsraums erheblich geringere Wanddicke auf. Diese Wand wird im folgenden wegen ihrer geringen Dicke als Membranwand bezeichnet.

Zweckmäßigerweise ist die Druckkammer jeweils im besagten Gehäuseabschnitt des Extrudergehäuses vorgesehen und nicht auf der Schneckenwelle. Der Grund hierfür ist in erster Linie darin zu sehen, dass eine hydraulische Druckmittelversorgung der Druckkammer wegen der damit verbundenen Abdichtungsprobleme an der Schneckenwelle schwieriger zu bewerkstelligen ist als am Extrudergehäuse, das im Unterschied zur Schneckenwelle völlig unbeweglich ist.

Besonders vorteilhaft lässt sich die Erfindung bei einem Einschneckenextruder realisieren, der einen rein zylindrischen Extrusionsraum aufweist, so dass der umlaufende Spalt am Blister als Ringspalt ausgebildet ist. Durch den hydraulischen Druck in der Druckkammer lässt sich die Membranwand in geometrisch sehr gleichmäßiger Form (Kreisform) auf das jeweils gewünschte Maß verformen. Die gewünschten Einstellungen sind außerordentlich schnell und einfach regelbar, da es nur auf den Differenzdruck zwischen dem Hydraulikdruck und dem Druck im Extrusionsraum ankommt.

Die Erfindung ist aber auch sehr vorteilhaft bei Doppelschneckenextrudern anwendbar. Bei diesen wird der Extrusionsraum durch zwei sich im Querschnitt zumindest über einen Teil der axialen Länge des Extrudergehäuses teilweise überlappende Längsbohrungen gebildet, die wegen ihrer Form auch als "Brillenbohrung" bezeichnet werden. In dieser Brillenbohrung sind zwei gleichsinnig oder gegensinnig drehbare, motorisch angetriebene Schneckenwellen angeordnet, die parallel nebeneinander liegen und mindestens jeweils einen zylindrischen Abschnitt aufweisen. Die zylindrischen Abschnitte der beiden Extruderschneckenwellen liegen dabei jeweils unmittelbar nebeneinander. Wenn die Druckkammer nicht jeweils auf den beiden Extruderschneckenwellen angeordnet wird, sondern an der Innenoberfläche des Gehäuses des Extrusionsraums, also in der Brillenbohrung vorgesehen ist, empfiehlt es ich, die Druckkammer nicht als vollständig umlaufende Kammer auszubilden, sondern diese in zwei separate Kammern aufzuteilen, die spiegelsymmetrisch zueinander angeordnet sind und sich unter Aussparung der beiden Zwickelbereich im Querschnitt des Extrudergehäuses nur jeweils über den weitaus größten Teil der zylindrischen Oberflächen der Längsbohrungen (Brillenbohrung) erstrecken. Im Übergangsbereich zwischen den beiden Längsbohrungen sind die beiden Kammern also nicht zusammenhängend.

Besonders vorteilhaft ist eine Ausführung der Erfindung bei einem Doppelschneckenextruder, wenn ein besonderer Gehäuseabschnitt vorgesehen wird, der statt einer Brillenbohrung zwei entsprechende vollzylindrische, d.h. sich nicht überlappende Längsbohrungen für die beiden Schneckenwellen aufweist, wobei diese Längsbohrungen selbstverständlich einen kleineren Durchmesser haben als die jeweiligen teilzylindrischen überlappenden Bohrungen der Brillenbohrung. Vorzugsweise entspricht der Durchmesser der vollzylindrischen Bohrung jeweils dem Kemdurchmesser der jeweiligen Schneckenwelle, ist also nur geringfügig größer als dieser. Bei dieser Ausführung besteht also in diesem besonderen Gehäuseabschnitt eine Materialbrücke an der dem Zwickelbereich der Brillenbohrung entsprechenden Stelle zwischen den beiden Längsbohrungen. In diesem Gehäuseabschnitt ist in der Oberfläche der Längsbohrung jeweils eine hydraulische Druckkammer angeordnet, die vollständig umlaufend ausgebildet ist wie bei der Ausführung für einen Einschneckenextruder. Diese Lösung ermöglicht eine völlig gleichförmige Einstellung des jeweiligen Ringspalts über den gesamten Umfang. Die Druckkammern der beiden Längsbohrungen können völlig gegeneinander abgeschottet sein, können aber auch leitungsmäßig unmittelbar miteinander verbunden sein.

Da die mit Schneckengängen versehenen Teile der Schneckenwellen einen größeren Außendurchmesser als die vollzylindrischen Längsbohrungen des besonderen Gehäuseabschnitts aufweisen, können sie zur Montage nicht durch diese hindurchgeschoben werden. Daher muss entweder der Gehäuseabschnitt geteilt ausgeführt werden, was entsprechend auch eine Teilung der hydraulischen Druckkammer in der Längsbohrung erfordern würde, oder die Schneckenwelle wird jeweils in axiale Teilstücke aufgeteilt, die z.B. über Steckverbindungen zusammengekoppelt werden können. Es können auch Schneckenelemente mit zentraler Durchgangsbohrung verwendet werden, die von den beiden Enden des Extrudergehäuses in dieses hineingeschoben und anschließend über einen durch die Durchgangsbohrung geführten Zuganker fest miteinander verbunden werden.

Es empfiehlt sich, die Druckkammer des Blisters in einem separaten im wesentlichen ringförmigen Gehäuseteil anzuordnen, das lediglich eine kurze axiale Baulänge aufweist, dessen Länge also kleiner ist als der Innendurchmesser des Extrusionsraums. Zweckmäßigerweise ist dieses ringförmige Gehäuseteil durch eine Flanschverbindung mit den übrigen Teilen des Extrudergehäuses verbunden.

In fertigungstechnischer Hinsicht bietet es sich an, die Druckkammer als Schweißkonstruktion auszuführen. Dabei sollten die Schweißnähte vorteilhafterweise außerhalb der Membranwand in dickwandigeren Bereichen vorgesehen werden, um die Membranwand selbst möglichst nicht in die Wärmeeinflusszone der Schweißnaht gelangen zu lassen, wodurch sich deren Werkstoffeigenschaften ungünstig verändern könnten.

Die Membranwand sollte in ihrer Dimensionierung auf einen Differenzdruck von mindestens 100 bar, vorzugsweise von mindestens 150 bar ausgelegt sein. In jedem Fall muss sichergestellt sein, dass die durch den angelegten hydraulischen Druck in der Druckkammer hervorgerufenen Kräfte an der Membran nur zu elastischen, nicht aber zu plastischen Verformungen führen. Außerdem sollte die Belastung unter der kritischen Beullast liegen, damit sich auf der Membranwand, die an der Innenoberfläche des Extrusionsraums angeordnet ist, keine in Umfangsrichtung wellige Verformung ergibt. Das würde nämlich bedeuten, dass die effektive Spalthöhe des Blisters in Umfangsrichtung variiert. Im praktischen Fall liegt die zweckmäßige Dicke der Membranwand im Bereich von etwa 0,5 bis 3 mm, vorzugsweise im Bereich von 1 bis 2 mm. Diese Angaben sind jedoch nicht als beschränkend anzusehen. Grundsätzlich hängt das Maß der Verformung nicht nur von der Dicke der Membranwand und dem aufgebrachten Druck in der Druckkammer ab, sondern wird selbstverständlich auch stark beeinflusst durch die axiale Länge der Membranwand, d.h. durch die Länge der Erstreckung der Druckkammer in Richtung der Achse der Schneckenwelle. Je länger die Membranwand ist, um so stärker wird die Verformung bei gleichem Druck.

Mit besonderem Vorteil lässt sich die Erfindung an einem Extruder nutzen, bei dem in Materialflussrichtung hinter dem Blister ein mehrwelliger Extruderabschnitt nachgeschaltet ist. Dieser mehrwellige Extruderabschnitt kann insbesondere als Planetwalzenextruderabschnitt ausgebildet sein.

Durch die erfindungsgemäße Ausstattung eines Extruders mit einem Blister, bei dem die wirksame Spalthöhe des Ringspaltes ohne Probleme jederzeit einfach durch eine von außen einstellbare Kraft durch elastische Verformung gezielt verändert werden kann, ist die Möglichkeit gegeben, ohne einen Wechsel der Schneckenwelle unterschiedliche Werkstoffe unter optimalen Verfahrensbedingungen zu verarbeiten, sofern die übrigen Schneckenelemente für den jeweiligen Werkstoff grundsätzlich geeignet sind. Bei instationären Verarbeitungsbedingungen ist es möglich, im laufenden Betrieb eine optimale Wahl der Spalthöhe eines Blisters vorzunehmen und zu realisieren. Bei einem erfindungsgemäßen Blister mit hydraulischer Druckkammer und Membranwand ist dies durch einfache Vorgabe des hydraulischen Drucks in der Druckkammer bzw, des Differenzdrucks zum Druck im Extrusionsraum möglich.

Nachfolgend wird die Erfindung anhand der Ausführungsbeispiele in der Zeichnung näher erläutert. Es zeigen:
- Fig. 1: eine schematische Darstellung eines Extruders mit einem im Mittelteil angeordneten Planetwalzenextruderabschnitt,
- Fig. 2: eine ausschnittsweise schematische Darstellung eines Blisters mit hydraulischer Druckkammer,
- Fig. 3: ein Gehäuseteil mit hydraulischer Druckkammer,
- Fig. 4: einen Querschnitt durch das Extrudergehäuse eines erfindungsgemäßen Doppelschneckenextruders und
- Fig. 5: eine Abwandlung der Ausführung von Fig. 4.

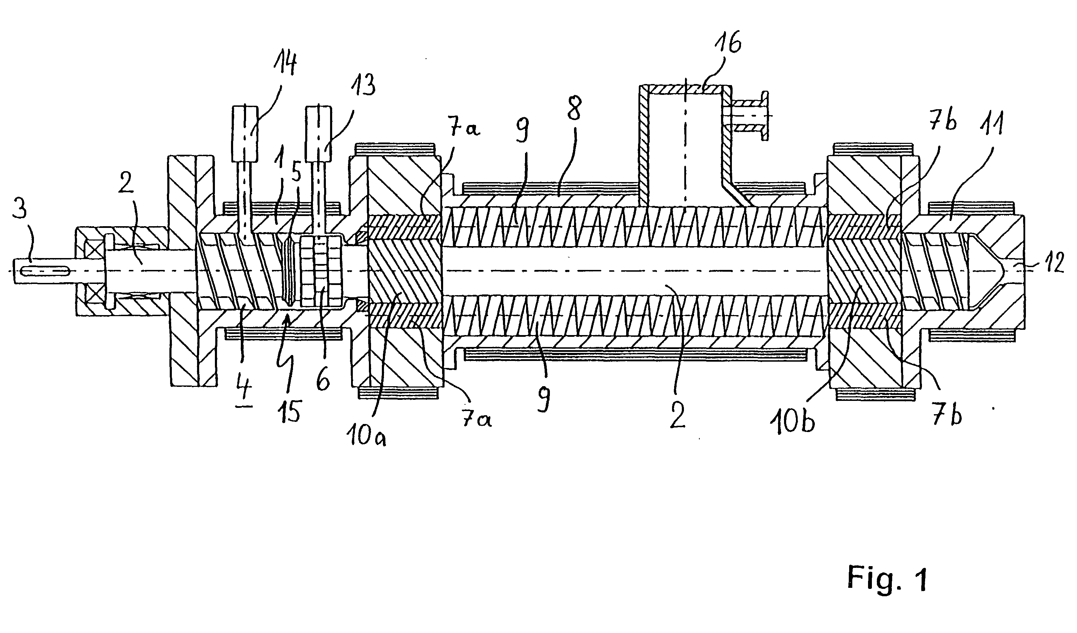

Die schematische Darstellung des Extruders in Figur 1 zeigt ein Extrudergehäuse, das von einer Schneckenwelle 2 über nahezu die gesamte axiale Länge durchsetzt ist. Die mit einem Wellenzapfen 3 mit Passfeder versehene Schneckenwelle 2 ist von einem nicht dargestellten Motor über ein ebenfalls nicht dargestelltes Getriebe rotatorisch angetrieben. Der unmittelbar an das Getriebe anschließende Gehäuseabschnitt 1, dessen zylindrische Oberfläche im Durchmesser im wesentlichen dem Aussendurchmesser der Schnecke der Schneckenwelle 2 entspricht, umschließt einen Teil des Extrusionsraums 4. Der Gehäuseabschnitt 1 ist mit einem Anschlussstutzen einer Schmelzezuführung 14 versehen. Dem dargestellten Extruder wird also das zu verarbeitende Material nicht in Form von Granulat oder Pulver, sondern in bereits aufgeschmolzener Form zugeführt. Unmittelbar im Anschluss an die Schnecke der Schneckenwelle 2 ist im Gehäuseabschnitt 1 auch ein Blister 15 angeordnet, der eine Drosselstelle bildet, so dass der vor dem Blister 15 liegende Teil des Extrusionsraums 4 stets vollständig mit Schmelze gefüllt ist. Der Blister 15 wird gebildet durch einen kurzen zylindermantelförmigen Abschnitt 5 auf der Schneckenwelle 2. Beiderseits dieses zylindermantelförmigen Abschnitts 5 schließen sich ebenfalls kurze kegelstumpfförmige Bereiche der Schneckenwelle 2 an. Auf die Gestaltung des Blisters 15 wird weiter unten noch näher eingegangen.

Hinter dem Blister 15 ist im Gehäuseabschnitt 1 der Anschlussstutzen einer Schleppmittelzuführung 13 angeordnet, durch die z.B. Wasser in den Extrusionsraum 4 und somit in die Schmelze eingedüst werden kann. Die Schneckenwelle 2 ist hinter dem Blister 15 als sogenannter Igel 6 gestaltet, d.h. mit stachelartigen, von der Schneckenwelle 2 radial abstehenden Mischelementen versehen. In diesem Bereich des Extrusionsraums 4 findet daher eine starke Blasenbildung in der Schmelze statt.

Die Schmelze gelangt danach in einen Planetwalzenextruderabschnitt 8, von dessen Planetwalzen 9 in der Darstellung zwei erkennbar sind. Die Planetwalzen 9 sind an ihren Enden jeweils in den Planetenrädern 7a, 7b eines Planetengetriebes gelagert, dessen Sonnenräder mit 10a und 10b bezeichnet sind. Die Sonnenräder 10a, 10b sind Bestandteil der Schneckenwelle 2. Im Bereich des Planetwalzenextruderabschnitts 8 findet ein Strippen der Schmelze statt. Die freigesetzten Gase können durch einen Entgasungsdom 16 entweichen. Im Anschluss an den Planetwalzenextruderabschnitt 8 ist wiederum eine Zone 11 eines Einwellenextruders vorgesehen, in der die entgaste Schmelze auf den erforderlichen Extrusionsdruck gebracht und durch eine Extrusionsdüse 12 ausgestoßen wird.

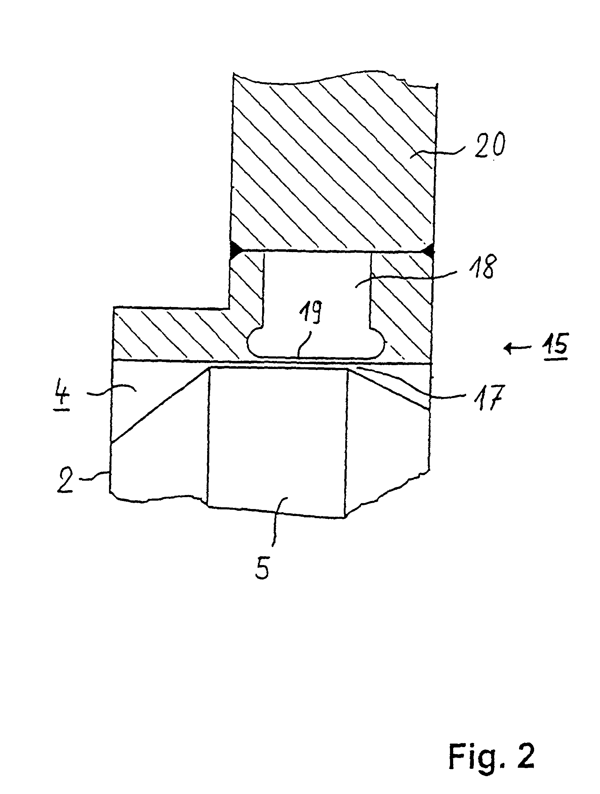

Die Figur 2 zeigt in einer ausschnittsweisen Darstellung den Bereich des erfindungsgemäß gestalteten Blisters 15 als Schnitt längs der Extruderachse. Von der Schneckenwelle 2 ist lediglich der zylindermantelförmige Abschnitt 5 mit den beiden daran unmittelbar anschließenden kegelstumpfförmigen Bereichen dargestellt. Der ringförmige Gehäuseteil 20 des Blisters 15 mit der hydraulischen Druckkammer 18 ist als kurzes separates Gehäuseteil ausgestaltet. Die Druckkammer ist durch eine Schweißkonstruktion gebildet, die aus zwei Teilen zusammengesetzt ist. Der äußere ringförmige Teil ist als massives Bauteil ausgeführt, während in den inneren ringförmigen Teil die hydraulische Druckkammer 18 z.B. durch einen Drehvorgang eingearbeitet worden ist. Durch Ineinanderfügen der beiden ringförmigen Teile und umlaufende Verschweißung beiderseits des ringförmigen Fügespaltes wird die Druckkammer 18 nach außen vollständig abgedichtet. Das hydraulische Druckmedium kann durch eine in dem Schnittbild nicht dargestellte Zuleitung in die Druckkammer 18 eingeführt werden. Zum Extrusionsraum 4 hin weist die Druckkammer 18 eine Wand auf, die als Membranwand 19 bezeichnet ist und eine im Vergleich zur Wanddicke des Extrudergehäuses außerordentlich geringe Wanddicke besitzt. Zwischen der Oberfläche des zylindermantelförmigen Abschnitts 5 der Schneckenwelle 2 und dieser Membranwand 19 ist ein relativ kleiner Ringspalt gebildet, der beispielsweise eine Größe von 2 oder 3 mm aufweist. Die Größe dieses Ringspalts 17 ist für die Einstellung des Schmeizendrucks von wesentlicher Bedeutung. Relativ geringe Änderungen in der Spalthöhe machen sich bereits stark bemerkbar. Damit die Schneckenwelle 2 exakt koaxial in diesem Ringspalt 17 bzw. im Extrusionsraum 4 liegt, ist es im Regelfall notwendig, die Schneckenwelle 2 nicht fliegend, sondern beidseitig zu lagern. Durch die Einleitung eines unter erhöhtem Druck stehenden hydraulischen Mediums in die Druckkammer 18 kann die Membranwand 19 in Richtung auf die Schneckenwelle 2 verformt werden. Die Membranwand 19 beult sich im dargestellten axialen Längsschnitt nach unten aus. Im Querschnitt zur Längsachse gesehen bedeutet dies, dass sich der Innendurchmesser des Extrusionsraum 4 im Bereich der Membranwand verringert, der Ringspalt 17 des Blisters somit ebenfalls verringert wird. Da der Druck des Druckmediums in weiten Grenzen veränderbar ist, aber jede Druckänderung nur mit vergleichsweise kleinen Veränderungen in der Verformung der Membranwand 19 verbunden ist, lässt sich die effektive Spalthöhe im Ringspalt 17 außerordentlich genau einstellen. Der hierfür erforderliche Steuerungsaufwand ist als geringfügig zu bezeichnen.

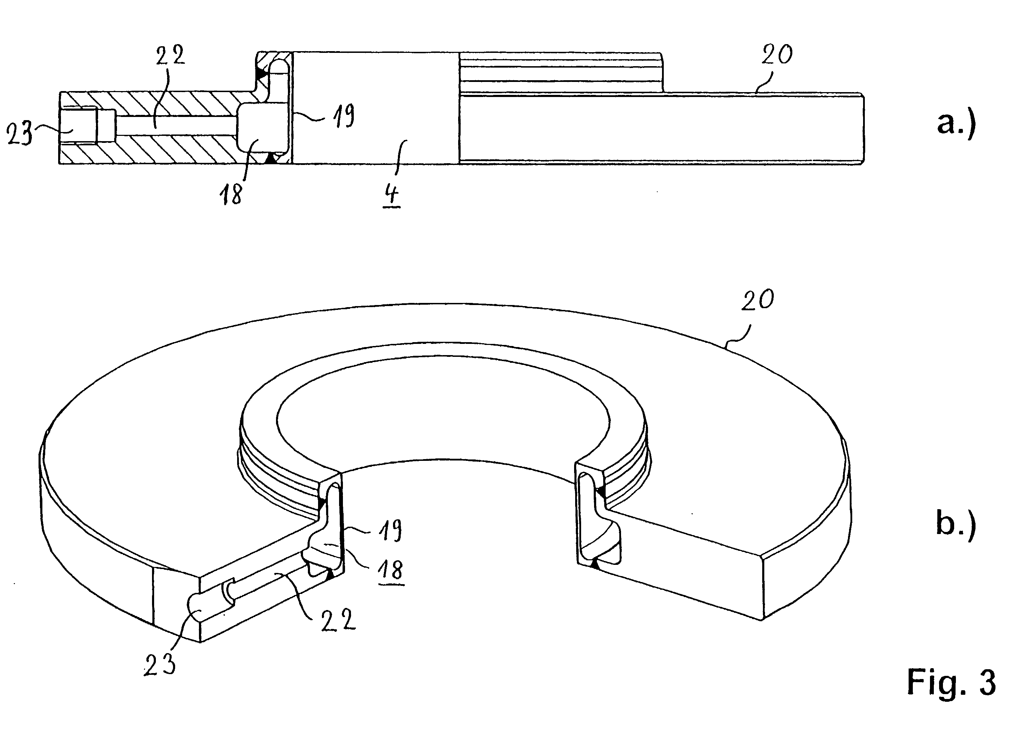

Die Figur 3 zeigt beispielhaft teils in der Seitenansicht und teils ebenfalls als axialen Längsschnitt (Teilfigur a) sowie als teilweise aufgebrochene perspektivische Ansicht (Teilfigur b) den Gehäuseteil 20 für einen erfindungsgemäßen Blister in einer hinsichtlich der Größenverhältnisse realistischen Form. Das Gehäuseteil 20 ist im wesentlichen ringförmig bzw. scheibenförmig ausgebildet. Die um den Bereich der Mittelachse liegende zylindrische Öffnung ist Teil des Extrusionsraums 4. Im Außenbereich ist der Gehäuseteil 20 im Sinne eines Flansches mit nicht dargestellten Durchgangsbohrungen versehen, um eine Befestigung mit den daran anschließenden Teilen des Extrudergehäuses auf einfache Weise zu ermöglichen. Im Unterschied zu der Ausführung in Figur 2 ist die ringförmige Druckkammer 18 mit der Membranwand 19 im axialen Längsschnitt nicht klappsymmetrisch gestaltet, sondern weist eine Querschnittsform auf, die einem Schuh ähnelt. Dadurch ist es möglich, die Druckkammer 18 bis in den Bereich des nach rechts weisenden Absatzes des ansonsten scheibenförmigen Gehäuseteils 20 zu erstrecken. Auch in diesem Fall ist die Druckkammer 18 als Schweißkonstruktion gebildet. Die Schweißnähte sind so angeordnet, dass sie in dickwandigeren Bereichen des Gehäuseteils 20 liegen und nicht in unmittelbarer Nähe der Membranwand 19. Um die Druckkammer 18 mit Hydraulikmittel zu versorgen, ist außen an dem Gehäuseteil 20 ein Gewinde für einen Hydraulikanschluss 23 vorgesehen, der seinerseits über einen Kanal 22 mit der Druckkammer 18 verbunden ist. Im vorliegenden Fall beträgt der Innendurchmesser des Extrusionsraums 4 etwa 90 mm, während die Dicke der Membranwand 19 bei 1 mm und die Länge der Druckkammer bzw. des zugehörigen Gehäuseteils 20 bei etwa 30 mm liegt.

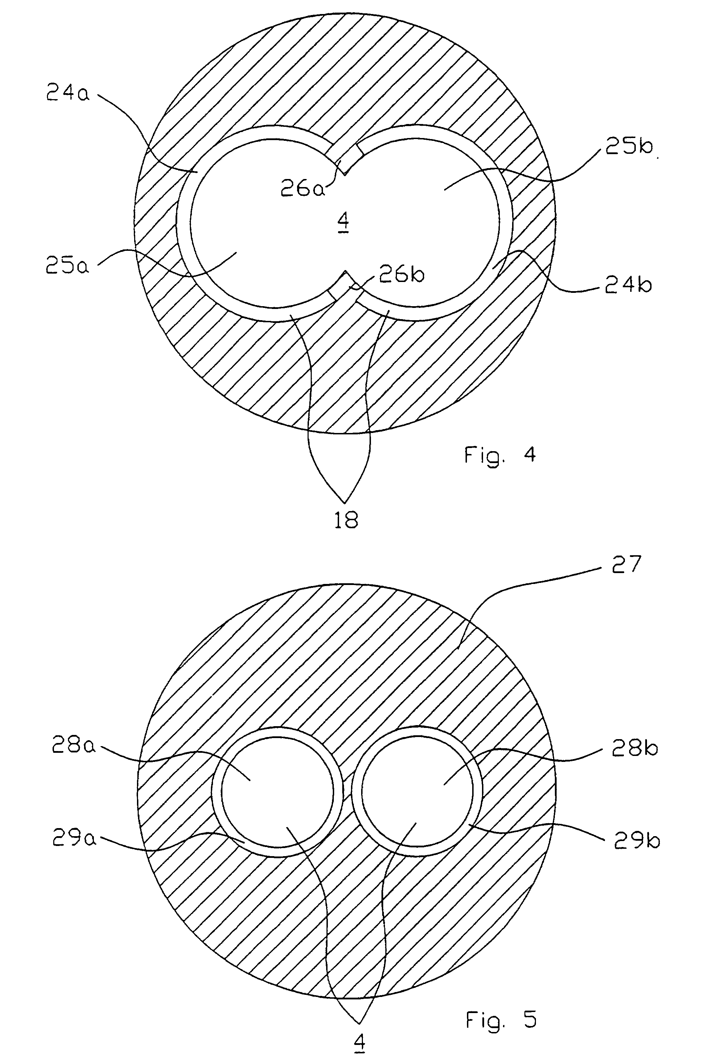

In Fig. 4 ist ein schematischer Schnitt durch das Gehäuse eines Doppelschneckenextruders dargestellt, dessen Extrusionsraum 4 durch die sich teilweise überlappenden Längsbohrungen 25a, b gebildet wird. Die beiden Extruderschneckenwellen sind nicht dargestellt. Die hydraulische Druckkammer 19 ist nicht vollständig umlaufend auf der Innenoberfläche des Extrusionsraums 4 ausgebildet, sondern aus den beiden gegeneinander abgeschotteten Kammern 24a, b zusammengesetzt, die sich jeweils über den weitaus größten Teil des Umfangs der Längsbohrung 25a bzw. 25b erstrecken. Lediglich die beiden Zwickelbereiche 26a, b der Brillenbohrung sind nicht von der hydraulischen Druckkammer 18 erfasst. Somit bleibt bei Betätigung der hydraulischen Druckkammer 18 lediglich ein relativ kleiner Teil der Extrusionsraumoberfläche im Bereich des Blisters von der angestrebten Verformung ausgenommen. Dies hat aber auf die Verfahrensführung im Doppelschneckenextruder praktisch keine negativen Auswirkungen.

In Fig. 5 ist eine besonders vorteilhafte Abwandlung der Ausführung von Fig. 4 dargestellt. Hierbei ist der Doppelschneckenextruder über einen Teil seiner axialen Länge in einem besonderen Gehäuseabschnitt 27 statt der beiden sich überlappenden Längsbohrungen 25a, b mit entsprechend koaxial zu der Brillenbohrung angeordneten vollzylindrischen, also sich nicht überlappenden Längsbohrungen 28a, b versehen. In diesen Längsbohrungen 28a, b ist jeweils, ähnlich wie dies in den Figuren 2 und 3 für einen Einschneckenextruder dargestellt ist, eine vollständig umlaufende Druckkammer 29a, b angeordnet. Die hydraulische Zuleitung ist ebenso wie in Fig. 4 nicht dargestellt.

### Bezugszeichenliste:

- 1: Gehäuseabschnitt
- 2: Schneckenwelle
- 3: Wellenzapfen
- 4: Extrusionsraum
- 5: zylindermantelförmiger Abschnitt
- 6: Igel
- 7, b: Planetenräder
- 8: Planetwalzenextruderabschnitt
- 9: Planetwalze
- 10a, b: Sonnenrad
- 11: Einwellenextruderzone
- 12: Extrusionsdüse
- 13: Schleppmittelzuführung
- 14: Schmelzezuführung
- 15: Blister
- 16: Entgasungsdom
- 17: umlaufender Spalt (Ringspalt)
- 18: hydraulische Druckkammer
- 19: Membranwand
- 20: ringförmiger Gehäuseteil
- 22: Kanal
- 23: Hydraulikanschluss
- 24a, b: Kammer
- 25a, b: Längsbohrung
- 26a, b: Zwickelbereich
- 27: Gehäuseabschnitt
- 28a, b: vollzylindrische Längsbohrung
- 28a, b: hydraulische Druckkammer

## Patentansprüche

1. Extruder, insbesondere zur Verarbeitung von Kunststoffschmelzen, mit einem in einem Extrudergehäuse angeordneten Extrusionsraum (4), durch den sich mindestens eine Extruderschneckenwelle (2) motorisch drehbar erstreckt, die mindestens einen zylindermantelförmigen Abschnitt (5) auf der Schneckenwelle aufweist, wobei der Extrusionsraum (4) mindestens einen Gehäuseabschnitt (1) aufweist, der zur Bildung eines umlaufenden Spalts (17) als Drosselstelle (Blister 15), insbesondere zur Einstellung des Drucks der Schmelze, die mindestens eine Extruderschneckenwelle (2) im Bereich des mindestens einen zylindermantelförmigen Bereichs (5) im wesentlichen äquidistant umgibt,
**dadurch gekennzeichnet,**
**dass** die Spalthöhe des umlaufenden Spalts (17) an der Drosselstelle durch von außen einstellbare Kraftwirkung unter elastischer Verformung der inneren Oberfläche des Extrusionsraums (4) und/oder der Oberfläche der Schneckenwelle (2) dadurch gezielt veränderbar ist, dass im Bereich der Drosselstelle in der Wand des Gehäuseabschnitts (1) und/oder in der mindestens einen Schneckenwelle (2) eine hydraulische Druckkammer (18) vorgesehen ist, die auf der dem Extrusionsraum (4) zugewandten Seite eine im Vergleich zur Wanddicke des Extrusionsraums (4) erheblich geringere Wanddicke aufweist (Membranwand 19), und ein hydraulisches Druckaggregat vorgesehen ist, das die Kraft zur Oberflächenverformung liefert.

2. Extruder nach Anspruch 1,
**dadurch gekennzeichnet,**
**dass** der Extruder ein Einschneckenextruder ist mit einem zylindrischen Extrusionsraum (4) und einem als Ringspalt ausgebildeten umlaufenden Spalt (17).

3. Extruder nach Anspruch 1,
**dadurch gekennzeichnet,**
**dass** der Extruder ein Doppelschneckenextruder ist mit zwei parallel zueinander angeordneten angetriebenen Extruderschneckenwellen, die in dem Extrudergehäuse, das zwei sich im Querschnitt zumindest über einen Teil der axialen Länge des Extrudergehäuses teilweise überdeckende zylindrische Längsbohrungen (25a, b) als Extrusionsraum (4) aufweist, gleichsinnig oder gegensinnig drehbar sind.

4. Extruder nach einem der Ansprüche 1 bis 3,
**dadurch gekennzeichnet,**
**dass** die Druckkammer (18) jeweils im Gehäuseabschnitt (1) vorgesehen ist.

5. Extruder nach den Ansprüchen 3 und 4,
**dadurch gekennzeichnet,**
**dass** die Druckkammer (18) in zwei separate Kammern (24a, b) aufgeteilt ist, die spiegelsymmetrisch zueinander angeordnet sind und sich unter Aussparung der beiden Zwickelbereiche (26a, b) im Querschnitt des Extrudergehäuses nur über den größten Teil der zylindrischen Oberfläche der beiden Längsbohrungen (25a, b) erstrecken.

6. Extruder nach Anspruch 3,
**dadurch gekennzeichnet,**
**dass** das Extrudergehäuse einen Gehäuseabschnitt (27) mit zwei vollzylindrischen Längsbohrungen (28a, b) für die zylindermantelförmigen Abschnitte der beiden Schneckenwellen aufweist und die Längsbohrungen (28a, b) jeweils mit einer vollständig umlaufenden hydraulischen Druckkammer (29a, b) versehen sind.

7. Extruder nach Anspruch 6,
**dadurch gekennzeichnet,**
**dass** der Durchmesser der Längsbohrungen (28a, b) nur geringfügig größer ist als der Kemdurchmesser der Schneckenwelle.

8. Extruder nach einem der Ansprüche 1 bis 7,
**dadurch gekennzeichnet,**
**dass** die Druckkammer (18) in einem separaten ringförmigen Gehäuseteil (20) von kurzer axialer Baulänge angeordnet ist, das vorzugsweise durch eine Flanschverbindung mit den übrigen Teilen des Extrudergehäuses verbunden ist.

9. Extruder nach einem der Ansprüche 1 bis 8,
**dadurch gekennzeichnet,**
**dass** die Druckkammer (18, 28a, b) als Schweißkonstruktion ausgebildet ist.

10. Extruder nach Anspruch 9,
**dadurch gekennzeichnet,**
**dass** die Schweißnähte außerhalb der Membranwand (19) in dickwandigeren Bereichen angeordnet sind.

11. Extruder nach einem der Ansprüche 1 bis 10
**dadurch gekennzeichnet,**
**dass** die Membranwand (19) auf einen Differenzdruck von mindestens 100 bar, insbesondere von mindestens 150 bar ausgelegt ist.

12. Extruder nach einem Ansprüche 1 bis 11,
**dadurch gekennzeichnet,**
**dass** die Membranwand (19) eine Dicke im Bereich von 0,5 bis 3 mm, insbesondere im Bereich von 1 bis 2 mm aufweist.

13. Extruder nach einem der Ansprüche 1 bis 12,
**dadurch gekennzeichnet,**
**dass** dem Blister (15) zumindest ein mehrwelliger Extruderabschnitt, insbesondere ein Planetwalzenextruderabschnitt (8), nachgeschaltet ist.

## Claims

1. Extruder, in particular for processing plastics melts, having an extrusion chamber (4) which is disposed in an extruder housing and through which at least one extruder screw shaft (2) extends so as to be rotatable by a motor, the screw shaft (2) having at least one cylindrical casing-like section (5) on the screw shaft, the extrusion chamber (4) having at least one housing section (1) which in order to form an encircling gap (17) as a throttle point (blister 15), in particular to adjust the pressure of the melt, surrounds the at least one extruder screw shaft (2) in the region of the at least one cylindrical casing-like region (5) in a substantially equidistant manner, **characterised in that** the gap height of the encircling gap (17) at the throttle point is controllably variable by applying force which is adjustable from outside, leading to resilient deformation of the inner surface of the extrusion chamber (4) and/or of the surface of the screw shaft (2) **in that** a hydraulic pressure chamber (18) is disposed in the region of the throttle point in the wall of the housing section (1) and/or in the at least one screw shaft (2), which pressure chamber (18) has considerably smaller wall thickness (membrane wall 19) on the side associated with the extrusion chamber (4) than the wall thickness of the extrusion chamber (4) itself, and a hydraulic pressure unit is provided which supplies the force for surface deformation.

2. Extruder according to claim 1, **characterised in that** the extruder is a single-screw extruder with a cylindrical extrusion chamber (4) and an encircling gap (17) formed as an annular gap.

3. Extruder according to claim 1, **characterised in that** the extruder is a double-screw extruder with two extruder screw shafts disposed and driven parallel to one another, which are rotatable in the same or opposite directions in the extruder housing, which has two cylindrical longitudinal bores (25a, b) as an extrusion chamber (4), the bores partly overlapping one another in cross-section at least over part of the axial length of the extruder housing.

4. Extruder according to one of claims 1 to 3, **characterised in that** the pressure chamber (18) is provided respectively in the housing section (1).

5. Extruder according to claims 3 and 4, **characterised in that** the pressure chamber (18) is divided into two separate chambers (24a, b) which are disposed with mirror symmetry to one another and which extend only over the major part of the cylindrical surface of the two longitudinal bores (25a, b), recessing the two gusset regions (26a, b) in the cross-section of the extruder housing.

6. Extruder according to claim 3, **characterised in that** the extruder housing has a housing section (27) with two fully cylindrical longitudinal bores (28a, b) for the cylindrical casing-like sections of the two screw shafts and the longitudinal bores (28a, b) are each provided with a fully encircling hydraulic pressure chamber (29a, b).

7. Extruder according to claim 6, **characterised in that** the diameter of the longitudinal bores (28a, b) is only slightly larger than the core diameter of the screw shaft.

8. Extruder according to one of claims 1 to 7, **characterised in that** the pressure chamber (18) is disposed in a separate annular housing part (20) of short axial length, which is connected preferably by a flange joint to the other parts of the extruder housing.

9. Extruder according to one of claims 1 to 8, **characterised in that** the pressure chamber (18, 28a, b) is formed as a weld construction.

10. Extruder according to claim 9, **characterised in that** the weld seam is disposed outside the membrane wall (19) in regions with thicker walls.

11. Extruder according to one of claims 1 to 10, **characterised in that** the membrane wall (19) is exposed to a differential pressure of at least 100 bar, in particular at least 150 bar.

12. Extruder according to one of claims 1 to 11, **characterised in that** the membrane wall (19) has a thickness in the region of 0.5 to 3 mm, in particular in the region of 1 to 2 mm.

13. Extruder according to one of claims 1 to 12, **characterised in that** at least one multi-shaft extruder section, in particular a planetary roller extruder section (8) is connected downstream of the blister (15).

## Revendications

1. Extrudeuse, en particulier pour transformer des masses fondues de matière plastique, comprenant une chambre d'extrusion (4) agencée dans un carter d'extrudeuse, à travers laquelle s'étend de manière à pouvoir tourner à l'aide d'un moteur au moins un arbre de vis d'extrudeuse (2), qui présente au moins un tronçon (5) en forme de corps cylindrique sur l'arbre de vis, la chambre d'extrusion (4) comportant au moins un tronçon de carter (1) qui, pour former un intervalle périphérique (17) comme point d'étranglement (blister 15), en particulier pour régler la pression de la matière fondue, entoure de manière essentiellement équidistante l'arbre de vis d'extrudeuse au moins unique (2) au niveau de la zone en forme de corps cylindrique au moins unique (5),
**caractérisée en ce que** la hauteur de l'intervalle périphérique (17) au point d'étranglement peut varier intentionnellement par l'action d'une force réglable de l'extérieur avec déformation élastique de la surface intérieure de la chambre d'extrusion (4) et/ou de la surface de l'arbre de vis (2) par le fait qu'il est prévu, dans la zone du point d'étranglement dans la paroi du tronçon de carter (1) et/ou dans l'arbre de vis au moins unique (2), une chambre de pression hydraulique (18) qui présente, du côté tourné vers la chambre d'extrusion (4), une épaisseur de paroi (paroi de membrane 19) considérablement plus faible comparée à l'épaisseur de paroi de la chambre d'extrusion (4), et un groupe de pression hydraulique qui fournit la force pour la déformation de surface.

2. Extrudeuse selon la revendication 1,
**caractérisée en ce que** l'extrudeuse est une extrudeuse à une vis avec une chambre d'extrusion cylindrique (4) et un intervalle périphérique (17) réalisé sous la forme d'un intervalle annulaire.

3. Extrudeuse selon la revendication 1,
**caractérisée en ce que** l'extrudeuse est une extrudeuse à vis double avec deux arbres de vis d'extrudeuse entraînés et agencés parallèlement l'un à l'autre qui peuvent tourner dans le même sens ou en sens inverse dans le carter d'extrudeuse qui présente, comme chambre d'extrusion (4), deux orifices longitudinaux cylindriques (25a, b) se chevauchant partiellement en coupe transversale au moins sur une partie de la longueur axiale du carter d'extrudeuse.

4. Extrudeuse selon l'une des revendications 1 à 3,
**caractérisée en ce que** la chambre de pression (18) est prévue dans le tronçon de carter (1).

5. Extrudeuse selon les revendications 3 et 4,
**caractérisée en ce que** la chambre de pression (18) est divisée en deux chambres séparées (24a, b) qui sont agencées symétriquement l'une par rapport à l'autre et s'étendent, en dégageant les deux zones d'angle (26a, b), en coupe transversale du carter de l'extrudeuse, seulement sur la partie la plus grande de la surface cylindrique des deux orifices longitudinaux (25a, b).

6. Extrudeuse selon la revendication 3,
**caractérisée en ce que** le carter d'extrudeuse présente un tronçon de carter (27) avec deux orifices longitudinaux entièrement cylindriques (28a, b) pour les tronçons en forme de corps cylindrique des deux arbres de vis et les orifices longitudinaux (28a, b) sont pourvus chacun d'une chambre de pression hydraulique (29a, b) entièrement périphérique.

7. Extrudeuse selon la revendication 6,
**caractérisée en ce que** le diamètre des orifices longitudinaux (28a, b) est seulement légèrement plus grand que le diamètre du noyau de l'arbre de vis.

8. Extrudeuse selon l'une des revendications 1 à 7,
**caractérisée en ce que** la chambre de pression (18) est agencée dans une partie de carter annulaire séparée (20) de longueur axiale courte qui est reliée de préférence par un raccord à brides aux autres parties du carter d'extrudeuse.

9. Extrudeuse selon l'une des revendications 1 à 8,
**caractérisée en ce que** la chambre de pression (18, 28a, b) est réalisée sous la forme d'une construction soudée.

10. Extrudeuse selon la revendication 9,
**caractérisée en ce que** les soudures sont disposées à l'extérieur de la paroi de membrane (19) dans des zones à paroi plus épaisse.

11. Extrudeuse selon l'une des revendications 1 à 10,
**caractérisée en ce que** la paroi de membrane (19) est conçue pour une pression différentielle d'au moins 100 bars, en particulier d'au moins 150 bars.

12. Extrudeuse selon l'une des revendications 1 à 11,
**caractérisée en ce que** la paroi de membrane (19) présente une épaisseur située dans la plage de 0,5 à 3 mm, en particulier dans la plage de 1 à 2 mm.

13. Extrudeuse selon l'une des revendications 1 à 12,
**caractérisée en ce qu'**au moins un tronçon d'extrudeuse à plusieurs arbres, en particulier un tronçon d'extrudeuse à cylindre planétaire (8), est monté en aval du blister (15).
